# EUROPÄISCHE PATENTSCHRIFT

(11) **EP 3 024 901 B1**
(45) Veröffentlichungstag und Bekanntmachung des Hinweises auf die Patenterteilung: **22.03.2017**
(21) Anmeldenummer: 14738825.0
(22) Anmeldetag: 11.07.2014
(51) Int. Cl.: C09D 201/00, C08K 5/54, C07D 317/10, C08G 77/38

(54) **BESCHICHTUNGSMASSEN, ENTHALTEND EINE VERBINDUNG MIT MINDESTENS ZWEI CYCLISCHEN CARBONATGRUPPEN UND EINER SILOXANGRUPPE**
COATING MATERIALS CONTAINING A COMPOUND HAVING AT LEAST TWO CYCLIC CARBONATE GROUPS AND A SILOXANE GROUP
MATIÈRES DE REVÊTEMENT CONTENANT UN COMPOSÉ PRÉSENTANT AU MOINS DEUX GROUPES CARBONATE CYCLIQUES ET UN GROUPE SILOXANE

(30) Priorität: 22.07.2013 EP 13177411
(43) Veröffentlichungstag der Anmeldung: 01.06.2016
(73) Patentinhaber: BASF SE, 67056 Ludwigshafen am Rhein (DE)
(72) Erfinder: KLOPSCH, Rainer, 67551 Worms (DE); LANVER, Andreas, 68199 Mannheim (DE); HAAF-KLEINHUBBERT, Christina, 69502 Hemsbach (DE); MORMUL, Verena, 68161 Mannheim (DE); HICKMANN, Volker, 67063 Ludwigshafen (DE)
(74) Vertreter: BASF IP Association
(86) Internationale Anmeldenummer: PCT/EP2014/064903
(87) Internationale Veröffentlichungsnummer: WO 2015/010924

(56) Entgegenhaltungen:
- WO-A1-2011/157671
- ZHENYA ZHU ET AL: "Synthesis of Polysiloxanes Bearing Cyclic Carbonate Side Chains. Dielectric Properties and Ionic Conductivities of Lithium Triflate Complexes", MACROMOLECULES, Bd. 27, Nr. 15, 1. Juli 1994 (1994-07-01), Seiten 4076-4079, XP055135538, ISSN: 0024-9297, DOI: 10.1021/ma00093a007

## Beschreibung

Die Erfindung betrifft Beschichtungsmassen, enthaltend eine Verbindung mit mindestens zwei cyclischen Carbonatgruppen und einer Siloxangruppe, welche in dieser Anmeldung "Carbonatverbindung" genannt wird. Die Erfindung betrifft auch spezielle Carbonatverbindungen.

In Beschichtungsmassen finden häufig reaktive Bindemittelsysteme Verwendung. Reaktive Bindemittelsysteme bestehen im Allgemeinen aus zwei Komponenten. Die beiden Komponenten sind üblicherweise bei Raumtemperatur flüssig und können leicht verarbeitet werden. Erst bei der späteren Verwendung reagieren die beiden Komponenten miteinander zu einem Polymer oder gar einem vernetzten Polymer, welches der erhaltenen Beschichtungsmasse die gewünschten Eigenschaften, wie Härte, Elastizität und Beständigkeit gegen Lösemittel oder Chemikalien verleiht.

Lange bekannt sind reaktive Bindemittelsysteme aus Verbindungen mit mindestens zwei Isocyanatgruppen (kurz Polyisocyanate) und Verbindungen mit mindestens zwei Hydroxylgruppen (kurz Polyole). Polyisocyanate und Polyole reagieren bei ihrer Verwendung zu einem Polyurethan.

Lange bekannt sind auch reaktive Bindemittelsysteme aus Verbindungen mit mindestens zwei Isocyanatgruppen (kurz Polyisocyanate) und Verbindungen mit mindestens zwei primären oder sekundären Aminogruppen (kurz Polyamine). Polyisocyanate und Polyamine reagieren bei ihrer Verwendung zu einem Polyharnstoff.

Polyisocyanate sind sehr reaktiv und reagieren sehr leicht mit Wasser. Aufgrund dieser Feuchtigkeitsempflindlichkeit ist bei der Lagerung und Verwendung von Polyisocyanaten auf Ausschluss von Wasser zu achten. Aromatische Polyisocyanate können in Beschichtungsmassen zu Verfärbungen führen. Weiterhin könnten gegen spezielle, leicht flüchtige Polyisocanate gesundheitliche Bedenken bestehen.

Grundsätzlich sind daher alternative Bindemittelsysteme erwünscht, welche keine Polyisocyanate enthalten.

In Macromolecules 1995, 27, 4076-4079 werden Verbindungen mit mehreren Carbonatgruppen und einer Polysiloxangruppe beschrieben. Die Verbindungen werden durch Hydrolilylierung hergestellt. Es wird eine mögliche Verwendung der Verbindungen in Kondensatoren bzw. Batterien erwähnt.

Aus WO 2011/157671, EP-A 837062 und Tetrahedron 65 (2009) 1889-1901 sind ebenfalls Verbindungen mit einer cyclischen Carbonatgruppe und ihre Herstellung bekannt. Diese Verbindungen entsprechen den obigen Verbindungen der Formel IV.

WO 2011/157671 beschreibt die Verwendung dieser Verbindungen als Reaktivverdünner in Epoxidharzen.

Gemäß der Patentanmeldung PCT/EP/2013/056716 (PF 73287) werden die Verbindungen der Formel IV zu polymerisierbaren Verbindungen mit einer ethylenisch ungesättigten Gruppe im Rest R4 umgesetzt. Die erhaltenen neuen Monomere sind radikalisch polymerisierbar. PCT/EP/2013/056716 beschreibt die Herstellung von Homo- und Copolymeren durch radikalische Polymerisation. Die so erhaltenen Polymere finden auch in zweikomponentigen Bindemittelsystemen Verwendung.

Aufgabe der vorliegenden Erfindung waren Beschichtungsmassen, welche alternativ zu Beschichtungsmassen auf Basis von Polyisocyanaten verwendet werden können. Die Beschichtungsmassen sollen zur Herstellung von Beschichtungen mit guten, ausgewogenen anwendungstechnischen Eigenschaften eignen. Die Beschichtungen sollen eine hohe Härte bei gleichzeitig guter Elastizität aufweisen. Auch sollen sie eine gute Beständigkeit gegen Lösemittel und Chemikalien zeigen.

Demgemäß wurden die oben definierten Beschichtungsmassen gefunden. Gefunden wurden auch spezielle Verbindungen mit mindestens zwei cyclischen Carbonatgruppen und einer Siloxangruppe (Carbonatverbindungen), welche sich sehr gut für Beschichtungsmassen eignen.

Die Beschichtungsmassen enthalten die oben definierte Carbonatverbindung.
Unter dem Begriff Carbonatverbindung werden auch Mischungen von verschiedenen Carbonatverbindungen verstanden, soweit im Folgenden aus dem Zusammenhang nichts anderes herborgeht.

### Zur Carbonatverbindung:

Bei den cyclischen Carbonatgruppen der Carbonatverbindung handelt es sich vorzugsweise um 5-Ringe, die von 3 C-Atomen und 2 Sauerstoffatomen ausgebildet werden. Das C-Atom zwischen den beiden Sauerstoffatomen ist durch Sauerstoff substituiert (Carbonatgruppe); der 5-Ring wird durch eine Ethylengruppe zwischen den beiden Sauerstoffatomen geschlossen, die Ethylengruppe kann an beiden C-Atomen substituiert sein. Die Carbonatgruppe ist über eins der beiden C-Atome der Ethylengruppe an die Verbindung gebunden.

Vorzugsweise enthält die Carbonatverbindung 2 bis 50, insbesondere 2 bis 30 cyclische Carbonatgruppen und besonders bevorzugt 2 bis 20 cyclische Carbonatgruppen.

Die Carbonatverbindung enthält weiterhin eine Siloxangruppe. In Siloxangruppen sind die Siliciumatome nicht direkt sondern über Sauerstoffatome verbunden. Siloxangruppen können linear oder verzweigt sein. Die Siloxangruppe enthält vorzugsweise 2 bis 100 Si-Atome, insbesondere 2 bis 70 Si-Atome und besonders bevorzugt 2 bis 50 Si-Atome, insbesondere z.B. auch 2 bis 20 Si-Atome. Die Si-Atome sind, soweit sie nicht an Sauerstoffatome oder an die Carbonatgruppen gebunden sind, durch Wasserstoff oder organische Gruppen substituiert. Bei den vorstehenden organischen Gruppen handelt es sich insbesondere um Kohlenwasserstoffgruppen und besonders bevorzugt um C1- bis C10- insbesondere um C1- bis C4- Alkylgruppen. In einer besonderen Ausführungsform haben die Si-Atome nur noch geringe Mengen an Wasserstoff als Substituent. Insbesondere sind weniger als 30 mol%, insbesondere weniger als 20 mol%, besonders bevorzugt weniger als 10 mol % der Substituenten an den Si-Atomen Wasserstoff. In einer besonderen Ausführungsform sind weniger als 5%, insbesondere weniger als 1 mol% der Substituenten an den Si-Atomen Wasserstoff.

Die Siloxangruppen sind in einer besonderen Ausführungsform über organische Gruppen, insbesondere Alkylengruppen, an die cyclischen Carbonatgruppen gebunden; als vorstehende Alkylengruppen kommen z.B. C2- bis C10 Alkylengruppen, insbesondere C2- bis C4-Alkylengrupen und besonders bevorzugt eine Ethylengruppe als Bindungsglied zwischen der Siloxangruppe und der cyclischen Carbonatgruppe in Betracht.

Als derartige Carbonatverbindungen in Betracht kommen z.B. die in Macromolecules 1994, 27, 4076-4079 beschriebenen Verbindungen mit cyclischen Carbonatgruppen und einer Siloxangruppe.

In einer bevorzugten Ausführungsform handelt es sich bei der oben beschriebenen Carbonatverbindung um eine Verbindung der Formel I 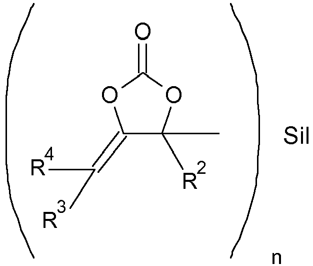 oder eine Verbindung der Formel II

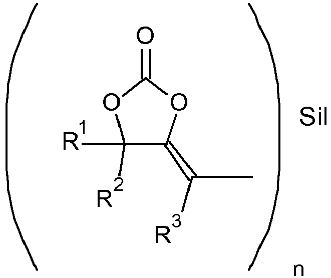

In Formel I und II steht Sil jeweils für einen n-wertigen Rest mit einer Siloxangruppe aus 2 bis 100 Si-Atomen, vorzugsweise aus 2 bis 70, insbesondere aus 2 bis 50 C-Atomen. In einer besonders bevorzugten Ausführungsform steht Sil jeweils für einen n-wertigen Rest mit einer Siloxangruppe aus 2 bis 20 und insbesondere 2 bis 10 Si-Atomen. Die Gruppe Sil kann neben der Siloxangruppe noch organische Brückengruppen zur Anbindung der Siloxangruppe an die Carbonatgruppe enthalten. Vorzugsweise handelt es sich bei den Brückengruppen um Alkylengruppen, insbesondere C2- bis C10-Alkylengruppen, besonders bevorzugt C2- bis C5-Alkylengruppen und insbesondere eine C2-Alkylengruppe. Insbesondere steht Sil für einen n-wertigen Rest, der aus einer Siloxangruppe, wie oben ausgeführt, und n Brückengruppen gemäß n angebundenen Carbonatgruppen besteht.

Die Variable n gibt die Anzahl der Carbonatgruppen an. Entsprechend den obigen Ausführungen steht n für eine ganze Zahl von 2 bis 50, insbesondere eine ganze Zahl von 2 bis 30 und vorzugsweise eine ganze Zahl von 2 bis 20. In einer besonders bevorzugten Ausführungsform steht n für eine ganze Zahl von 2 bis 5. Zum Beispiel steht n ganz besonders bevorzugt für 2 oder 3.

Die Reste R¹ bis R⁴ (Reste R² bis R⁴ in Formel I und R¹ bis R³ in Formel II) stehen jeweils unabhängig voneinander für Wasserstoff oder einen organische Gruppe mit 1 bis 10 C-Atomen. Bei der vorstehenden organischen Gruppe handelt es sich vorzugsweise um eine Kohlenwasserstoffgruppe, insbesondere eine Alkylgruppe. Die Reste R¹ bis R⁴ stehen vorzugsweise jeweils unabhängig voneinander für Wasserstoff oder eine C1- bis C10-Alkylgruppen, insbesondere unabhängig voneinander für ein Wasserstoff oder eine C1- bis C4-Alkylgruppe.

In einer besonderen Ausführungsform stehen die Reste R¹ und R² (in Formel I nur Rest R²) für eine C1- C4 Alkylgruppe, insbesondere eine Methylgruppe und R³ und R⁴ (in Formel II nur R³) jeweils für ein Wasserstoff.

Besonders bevorzugt ist die Carbonatverbindung der Formel I.

Eine besonders bevorzugte Carbonatverbindung der Formel I ist z.B. die Verbindung der Formel III 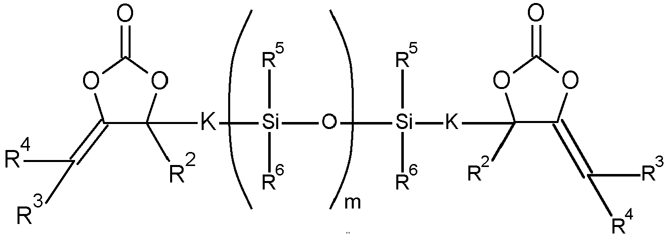 wobei R² bis R⁴ die obige Bedeutung haben, K für ein zweiwertige organische Gruppe mit 2 bis 10 C-Atomen, R⁵ und R⁶ unabhängig voneinander für ein Wasserstoffatom oder eine organische Gruppe mit 1 bis 10 C-Atomen und m für eine ganze Zahl von 1 bis 99 stehen.

R² bis R⁴ haben im Übrigen die obigen bevorzugten Bedeutungen.
Die bevorzugten Bedeutungen von m entsprechen der obigen Anzahl von bevorzugten Siliciumatomen der Siloxangruppe, bevorzugt steht m für eine ganze Zahl von 1 bis 69, besonders bevorzugt von 1 bis 49 und insbesondere von 1 bis 19.

Zu R⁵ und R⁶ gelten alle obigen Aussagen zu den bevorzugten Substituenten an den SiliciumAtomen. Ganz besonders bevorzugt handelt es sich demnach bei R⁵ und R⁶ um C1- bis C4-Alkylgruppen oder Wasserstoff, wobei vorzugsweise weniger als 30 mol%, insbesondere weniger als 20 mol %, besonders bevorzugt weniger als 10 mol % der Substituenten an den Si-Atomen Wasserstoff sind; in einer besonderen Ausführungsform sind weniger als 5%, insbesondere weniger als 1 mol % der Substituenten an den Si-Atomen Wasserstoff.

### Zur Herstellung der Carbonatverbindung

Die Carbonatverbindungen können durch Hydrosilylierung erhalten werden. Dazu kann ein cyclisches Carbonat, welches an einem der Ring-atome durch eine ethylenisch ungesättigte Gruppen (Doppel- oder Dreifachbindung, vorzugsweise Doppelbindung, besonders bevorzugt eine Vinylgruppe) substituiert ist (im Folgenden kurz "ethylenisch ungesättigtes Carbonat" genannt), mit einem Siloxan, welches Silicium-gebundene Wasserstoffatome, also reaktive Wasserstoffatome enthält, umgesetzt werden.

Bei der Umsetzung addiert sich ein reaktives Wasserstoffatom an ein C-Atom der ethylenisch ungesättigten Gruppe und die verbleibende Siloxangruppe an das andere C-Atom der ethylenisch ungesättigten Gruppe. Exemplarisch ist das Reaktionsschema in Herstellungsbeispiel 2 wiedergegeben.

Eine entsprechende Herstellung von Carbonatverbindungen mit zwei cyclischen Carbonatgruppen und einer Siloxangruppe durch Hydrosilylierung ist z.B. Macromolecules 1995, 27, 4076-4079 beschrieben.

Bei der Hydrosilylierung kann sowohl das ethylenisch ungesättigte Carbonat als auch das Siloxan im Überschuss eingesetzt werden. Zum Beispiel kann ein Siloxan ausgewählt werden, welches die gewünschte Anzahl von Silicium-gebundenen Wasserstoffen aufweist und die gewünschte Menge an ethylenisch ungesättigtem Carbonat entsprechend bestimmt werden. Bei equimolarer Menge des ethylenisch ungesättigten Carbonats werden bei vollständigem Umsatz alle Silicium-gebundenen Wasserstoffe durch einen Substituenten mit der Carbonatgruppe ersetzt. Wird weniger als die equimolare Menge an ethylenisch ungesättigtem Carbonat zur Umsetzung gebracht, enthält die erhaltene Verbindung neben den Carbonatgruppen auch noch Silicium-gebundene Wasserstoffe. In einer bevorzugten Ausführungsform wird das ethylenisch ungesättigte Carbonat equimolar oder im Überschuss eingesetzt. Auf diese Weise enthält die erhaltene Verbindung keine oder nur noch wenige Silicium-gebunden Wasserstoffatome.

Die Umsetzung kann in Gegenwart oder Abwesenheit von Lösemittel erfolgen. Im Allgemeinen sind die verwendeten Ausgangsstoffe (ethylenisch ungesättigtes Carbonat und Siloxan) flüssig, so dass kein Lösemittel benötigt wird.

Die Hydrosilylierung wird vorzugsweise in Gegenwart eines Katalysators durchgeführt. Geeignete Katalysatoren sind z.B. Metalle oder Metallsalze der Platingruppe. Vorzugsweise handelt es sich um Trägerkatalysatoren, bei denen die Metalle auf einen Träger, z.B. Aluminiumoxid oder Zirkoniumdioxid aufgebracht sind.

Die Umsetzung erfolgt im Allgemeinen bei Normaldruck und Temperauren von 20 bis 100°C. Die Umsetzung ist exotherm, daher wird soweit notwendig gekühlt, um die Temperatur im gewünschten Bereich zu halten.

Die erhaltene Carbonatverbindung ist oft bei Normalbedingungen (20°C, 1 bar Raumtemperatur) fest. Nach Ende der Umsetzung kann der erhaltene Feststoff durch Lösen in einem geeigneten Lösemittel, z.B. ein aromatischer oder aliphatischer Kohlenwasserstoff, und Umkristallisation gereinigt werden.

Bevorzugte Carbonatverbindungen der Formel I oder II sind entsprechend durch Hydrosilylierung einer Verbindung der Formel IV 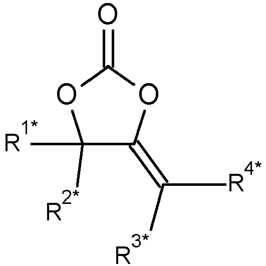 erhältlich. In Formel IV haben die Reste R1* bis R4* die obige Bedeutung der entsprechende Reste R1 bis R4 in Formel I und II, jedoch einer der Reste R1* bis R4* muss eine ethylenisch ungesättigte Gruppe enthalten.

Die Herstellung von Verbindungen der Formel IV ist bekannt und z.B. in Tetrahedron 65 (2009) 1889-1901 beschrieben.

Die Verbindung der Formel IV wird mit einem Siloxan umgesetzt, welches die gewünschte Anzahl von Si-Atomen und Silicium-gebundenen Wasserstoffe, mindestens jedoch zwei Silicium-gebundene Wasserstoffe, enthält.

Im Falle der Carbonatverbindungen der Formel I wird bei der Hydrosilylierung eine Verbindung der Formel IV eingesetzt, in der die Reste R1* bis R4* die obige Bedeutung der entsprechende Reste R1 bis R4 in Formel I und II haben, jedoch mindestens einer der Reste R1* oder R2* eine ethylenisch ungesättigte Gruppe, vorzugsweise eine endständige ethylenisch ungesättigte Gruppe enthält.

Besonders bevorzugt handelt es sich daher bei der Verbindung der Formel IV um eine Verbindung, in der R1* für eine C2- bis C10-Alkenylgruppe oder eine C2- bis C10-Alkinylgruppe, R2* für ein Wasserstoffatom oder eine C1- bis C10-Alkylgruppe, und R3* und R4* unabhängig voneinander für ein Wasserstoffatom oder eine C1- bis C10- Alkylgruppe stehen. Insbesondere steht R1* für eine C2- bis C10-Alkenylgruppe, insbesondere eine Alkenylgruppe mit endständiger Doppelbindung. In einer ganz besonders bevorzugten Ausführungsform steht R1* für eine Vinylgruppe.

Im Falle besonders bevorzugter Carbonatverbindungen der Formel I wird daher bei der Hydrosilylierung insbesondere eine Verbindung der Formel IV eingesetzt, in der R1* für eine Vinylgruppe, R2* für eine C1- bis C4-Alkylgruppe und R3* und R4* für ein H-Atom stehen. Als Beispiel einer derartigen Verbindung der Formel IV sei die nachstehende Verbindung der Formel V genannt:

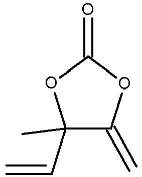

### Zu den Beschichtungsmassen

Beschichtungsmassen enthalten als wesentlichen Bestandteil ein Bindemittel, welches die zusammenhängende Beschichtung ausbildet und der Beschichtung ihre mechanische Festigkeit gibt. Beschichtungsmassen bestehen oft ausschließlich aus dem Bindemittel. Sie können jedoch auch Additive enthalten, z.B. Pigmente, Farbstoffe, Stabilisatoren etc., welche zusätzliche Eigenschaften der Beschichtung, wie Farbe, Stabilität gegen Alterung und Verfärbung etc. bewirken.

Die Beschichtungsmassen enthalten die vorstehenden Carbonatverbindungen als Bestandteil des Bindemittels.

Die Carbonatverbindungen können aufgrund der darin vorhandenen Alkyliden-1,3-dioxolan-2-on-Gruppen mit zahlreichen nucleophilen Gruppen unter Bindungsbildung reagieren. Beispiele für solche nucleophilen Gruppen sind z.B. Hydroxylgruppen, primäre und sekundäre Aminogruppen, Phosphingruppen, Phosphonatgruppen, Phosphonatgruppen und Mercaptogruppen.

Das Bindemittel der Beschichtungsmassen enthält daher neben den Carbonatverbindungen vorzugsweise eine Verbindung, welche mit den Carbonatverbindungen umgesetzt werden kann, so dass sich ein höhermolekulares und/oder vernetztes Polymersystem und damit verbunden eine Beschichtung mit guten mechanischen Eigenschaften ausbildet. Vorzugsweise enthalten daher die Beschichtungsmassen neben den Carbonatverbindungen eine Verbindung mit mindestens zwei reaktiven Gruppen, ausgewählt aus Hydroxylgruppen, primären Aminogruppen, sekundären Aminogruppen und Mercaptogruppen; derartige Verbindungen werden im Folgenden "reaktive Verbindung" genannt.

Besonders bevorzugt handelt es sich bei den reaktiven Verbindungen um Verbindungen mit mindestens zwei Hydroxylgruppen oder mindestens zwei primären oder sekundären Aminogruppen. In einer bevorzugten Ausführungsform sind die Hydroxylgruppen, bzw. primäre oder sekundären Aminogruppen jeweils über eine aliphatische Gruppe angebunden, es handelt sich daher um sogenannte aliphatische Hydroxylgruppen, bzw. aliphatische primäre oder sekundäre Aminogruppen.

Verbindungen mit zwei oder mehr Hydroxylgruppen werden im Folgenden "Polyole" genannt. Verbindungen mit mindestens zwei primären oder sekundären Aminogruppen werden im Folgenden Polyamine genannt.

Besonders bevorzugt enthalten daher die Beschichtungsmassen neben der Carbonatverbindung Polyole, Polyamine oder deren Mischungen.

Als Bestandteil der Beschichtungsmassen kommen sowohl niedermolekulare als auch höhermolekulare Polyole oder Polyamine in Betracht.

Niedermolekulare Polyole sind zum Beispiel aliphatische Polyole oder Ethergruppen enthaltende aliphatische Polyole mit 2 bis 5 Hydroxylgruppen wie 1,4-Butandiol, Ethylenglycol, Diethylenglycol, Triethylenglycol, Neopentylglycol, 1,3-Propandiol, 1,5-Pentandiol, 1,6-Hexandiol, Glycerin, Diglycerin, Pentaerythrit, Dipentaerythrit, Zuckeralkohole wie Sorbit und Mannit.

Niedermolekulare Polyamine sind zum Beispiel aliphatische Polyamine mit 2 bis 5 primären oder sekundären Aminogruppen wie Ethylendiamin, 1,2- und 1,3-Propandiamin, Neopentandiamin, Hexamethylendiamin, Diethylendiamin, Triethylentetramin, Tetraethylenpentamin, Trimethylhexamethylendiamin, 1,2-Diaminocyclohexan, oder Isophorondiamin,

Die niedermolekularen Polyole oder Polyamine haben insbesondere ein Molekulargewicht von 60 bis 499 g/mol.

Höhermolekulare Polyole oder Polyamine sind insbesondere Polyesterpolyole, Polyetherpolyole, Polyesteramidpolyole, Polycarbonatpolyole, Polyacrylatpolyole, Polyetheramine, Polyamidoamine oder deren Mischungen.

Die vorstehenden Polyole und Polyamine sind lange bekannt und werden bisher unter anderem für Beschichtungsmassen verwendet, welche Polyisocyanate enthalten. Sie sind insbesondere durch Umsetzung von niedermolekularen Polyolen mit Dicarbonsäuren (Polyesterpolyole), mit Dicarbonsäuren und /oder Dicarbonsäureamiden (Polyesteramidpolyole) mit Carbonaten (Polycarbonatpolyole), durch Alkoxylierung von niedermolekularen Polyolen (Polyetherpolyole) oder durch Aminierung der vorstehenden Polyole, insbesondere der Polyetherpolyole zu Polyaminen (Polyetheramine) erhältlich.

Polyamidoamine sind durch Umsetzung von dimeren Fettsäuren (z.B. dimere Linolsäure) mit niedermolekularen Polyaminen erhältlich.

Polyacrylatpolyole sind durch radikalische Polymerisation von (Meth)acrylaten erhältlich, wobei Hydroxy-funktionelle (Meth)acrylate als Comonomere eingesetzt werden.

Die höhermolekularen Polyole und Polyamine haben vorzugsweise ein zahlenmittleres Molekulargewicht von 500 bis 10.000 g/mol, insbesondere 800 bis 5.000 g/mol (bestimmt durch Gelpermeationschtomatographie).

Die Beschichtungsmassen enthalten die Carbonatverbindungen und die reaktiven Verbindungen insbesondere in einer Menge, dass das Molverhältnis der cyclischen Carbonatgruppen zu den damit reaktiven Gruppen (insbesondere Hydroxylgruppen, primäre und sekundäre Aminogruppen) im Bereich von 1 : 10 bis 10 : 1, insbesondere im Bereich von 5 : 1 bis 1 : 5 und besonders bevorzugt im Bereich von 1 : 2 bis 2 : 1 liegt. In einer besonderen Ausführungsform beträgt das vorstehende Molverhältnis 1 : 1,5 bis 1,5 : 1, insbesondere 1 : 1,2 bis 1,2 : 1.

Die Beschichtungsmassen können neben den Carbonatverbindungen und reaktiven Verbindungen weitere Bestandteile enthalten.

In Betracht kommen z.B. Katalysatoren, welche insbesondere im Falle von Polyolen als reaktive Verbindung verwendet werden und die Umsetzung der Hydroxylgruppen mit der cyclischen Carbonatgrupe katalysieren. Derartige Katalysatoren sind insbesondere Verbindungen mit Stickstoffatome, insbesondere Aminoverbindungen oder Azaverbindungen wie DBU (1,8-Diazabicyclo[5.4.0]undec-7-en). Der Gehalt an derartigen Katalysatoren kann z.B. 0,01 bis 10 Gewichtsteile, insbesondere 0,1 bis 5 Gewichtsteile auf 100 Gewichtsteile die Gewichtssumme aus Carbonatverbindungen und Polyolen bertragen.

Als weiteren Bestandteil können die Beschichtungsmassen Lösemittel enthalten. Lösemittel sind insbesondere Wasser und bei 20°C (1 bar) flüssige organische Verbindungen, welche nicht mit Bestandteilen des Bindemittels reagieren und bei der späteren Ausbildung der Beschichtung entfernt werden. Die Mitverwendung von Lösemittel kann insbesondere bei festen Carbonatverbindungen in Betracht kommen. Diese können in dem Lösemittel, z.B. Butylacetat gelöst und als Lösung leicht mit den anderen Bestandteilen der Beschichtungsmasse gemischt werden. Auch verringern die Lösemittel die Viskosität der Beschichtungsmasse und erleichtern den Beschichtungsvorgang.

Als Lösemittel kommen polare oder unpolare Lösemittel in Betracht. Als unpolare Lösemittel seien aliphatische oder aromatische Kohlenwasserstoffe genannt. Bevorzugte Lösemittel sind polare organische Lösemittel, insbesondere Ketone, Ether oder Ester.

Die Beschichtungsmassen können insbesondere neben den Carbonatverbindungen und den damit reaktiven Verbindungen noch andere Bindemittel oder Bindemittelbestandteile enthalten, z.B. sonstige Polymere die eine Beschichtung ausbilden oder niedermolekulare Verbindungen, z.B. Reaktivverdünner, die an die sonstigen Polymere angebunden werden oder durch Aushärtung zur Beschichtungsbildung beitragen.

In einer bevorzugten Ausführungsform sind die Carbonatverbindungen und die damit reaktiven Verbindungen der überwiegende und wesentliche Bestandteil der Beschichtungsmassen bzw. des Bindemittels der Beschichtungsmassen.

Vorzugsweise handelt es sich bei mindestens 50 Gew. %, besonders bevorzugt bei mindestens 70 Gew. %, ganz besonders bevorzugt bei mindestens 90 Gew. % und in einer besonderen Ausführungsform bei mindestens 95 Gew.% bzw. bei 100 Gew. % aller Bestandteile des Bindemittels der Beschichtungsmasse um Carbonatverbindungen und damit reaktive Verbindungen.

Weitere Bestandteile der Beschichtungsmasse können z.B. Hilfsstoffe sein, wie sie für die konkrete Verwendung der Beschichtungsmasse hilfreich oder üblich sind. Bei den Beschichtungsmassen kann es sich z.B. um Klebstoffe oder Lacke handeln.

Übliche Hilfsstoffe im Falle der Klebstoffe sind z.B. klebrigmachende Harze (Tackifier).

Sonstige Hilfsstoffe für Klebstoffe oder Lacke sind z.B. anorganische oder organische Füllstoffe in Form von kleinen Teilchen oder Fasern wie Calciumcarbonate, Silikate, Glasfasern oder Kohlefasern.

Als Hilfsstoffe in Betracht kommen weiterhin z.B. Antioxidantien, UV-Absorber/Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, optische Aufheller, Flammschutzmittel.

Die Beschichtungsmassen enthalten vorzugsweise 0,1 bis 50 Gew. %, besonders bevorzugt 1 bis 50 Gew. %, insbesondere 5 bis 50 Gew. % Carbonatverbindungen, bezogen auf die gesamte Beschichtungsmasse.

Die Beschichtungsmassen enthalten vorzugsweise Carbonatverbindungen und reaktive Verbindungen in einer Gesamtmenge von mindestens 10 Gew. %, besonders bevorzugt von mindestens 30 Gew. %, insbesondere von mindesten 50 Gew. %, und in einer besonderen Ausführungsform von mindestens 70 Gew. %. Die Beschichtungsmassen können z.B. zu 50 bis 100 Gew.% und insbesondere zu 70 bis 100 Gew. % aus den Carbonatverbindungen und den reaktiven Verbindungen bestehen.

Es kann sich bei den Beschichtungsmassen um ein- oder zweikomponentige Beschichtungsmassen handeln. Einkomponentige Beschichtungsmassen enthalten die Carbonatverbindungen und die reaktive Verbindung bereits während der Lagerung bis zu ihrer späteren Verwendung. Bei zweikomponentigen Beschichtungsmassen werden die miteinander reaktiven Bestandteile, hier die Carbonatverbindung und die reaktive Verbindung, zunächst separat gelagert und erst kurz vor ihrer Verwendung unter Ausbildung der vollständigen Beschichtungsmasse zusammengebracht. Vorzugsweise handelt es sich bei der Beschichtungsmasse um eine zweikomponentige Beschichtungsmasse, bei der die Carbonatverbindung und die reaktive Verbindung kurz vor der Verwendung zusammengebracht werden und gegebenenfalls mit anderen Bestandteilen zu einer homogenen Beschichtungsmasse gemischt werden.

Die Beschichtungsmassen können z.B. Klebstoffe sein. Als Klebstoffe seien insbesondere zweikomponentige Strukturklebstoffe erwähnt. Strukturklebstoffe dienen zur dauerhaften Verbindung von Formteilen miteinander. Die Formteile können aus beliebigem Material sein; in Betracht kommen Materialien aus Kunststoff, Metall, Holz, Leder, Keramik etc. Es kann sich auch um Fußbodenklebstoffe handeln. Die Zusammensetzungen eignen sich auch als Klebstoffe für die Herstellung von Leiterplatten (electronic circuits), insbesondere auch nach der SMT-Methode (surface mounted technology).

Die Beschichtungsmassen sind insbesondere Lacke, worunter hier Beschichtungsmassen zur Herstellung von Beschichtungen zum Schutz vor äußeren Einwirkungen (z.B. Korrosionsschutz, Schutz vor mechanischer Beschädigung, vor Sonnenlicht, oder Umwelteinflüssen etc.) oder Beschichtungsmassen für dekorative Zwecke (Glanzlacke etc.) verstanden werden. Die Lacke können durch üblichen Applikationsmethoden wie z.B. Spritzen, Rakeln, Streichen, Gießen, Tauchen oder Walzen aufgebracht werden. Vorzugsweise werden Spritzapplikationsmethoden angewandt wie zum Beispiel Druckluftspritzen, Airless Spritzen, Hochrotation, elektrostatischer Sprühauftrag (ESTA), gegebenenfalls verbunden mit Heißspritzapplikation wie zum Beispiel Hot-Air-Heißspritzen.

Es kann sich auch um Basislacke oder Decklacke von Mehrschicht-Lacksystemen handeln.

Mit den Lacken können übliche Substrate bzw. übliche Oberflächen beschichtet werden, z.B. Substrate oder Oberflächen aus Metall, Kunststoff, Holz, Keramik, Stein, Textil, Leder, Glas, sowie Faserverbunde, Glasfasern, Glas- und Steinwolle, mineral- und Baustoffe wie Gipsplatten, Zementplatten oder Dachziegel.

Die Beschichtungsmassen werden, z.B. als Klebstoff oder Lack, zunächst auf die zu beschichteten Substrate aufgebracht, vorzugsweise erfolgt danach die Umsetzung der Carbonatverbindung der reaktiven Verbindung (Härtung).

Die Härtung der Beschichtungsmasse kann thermisch durch Erwärmen erfolgen. Gleichzeitig wird durch ein Erwärmen gegebenenfalls mitverwendetes Lösemittel entfernt.

Die Härtungstemperatur kann z.B. 20 bis 200°C, insbesondere 50 bis 200°C, besonders bevorzugt 70 bis 150°C betragen. Die Härtung kann auch bei niedrigeren Temperaturen über einen entsprechend größeren Zeitraum erfolgen.

Die mit den erfindungsgemäßen Beschichtungsmassen erhaltenen Beschichtungen haben sehr gute anwendungstechnische Eigenschaften. Insbesondere haben sie eine sehr gute Härte bei gleichzeitig guten elastischen Eigenschaften.

Die erfindungsgemäßen Beschichtungsmassen lassen sich leicht verarbeiten. Sie sind sehr reaktiv, so dass sie leicht unter moderaten Bedingungen zu härten sind, andererseits haben sie aber eine ausreichend lange Topfzeit, welches die Zubereitung der Beschichtungsmasse durch Mischen der Bestandteile und den Beschichtungsvorgang erleichtert.

### Beispiele

### Herstellungsbeispiele

### Herstellungsbeispiel 1

### Herstellung von 4-Methyl, 4-Vinyl, 5-Methylen-1,3-dioxolan-2-on

### (Verbindung der Formel IV, kurz: exoVCA)

### Reaktionsschema:

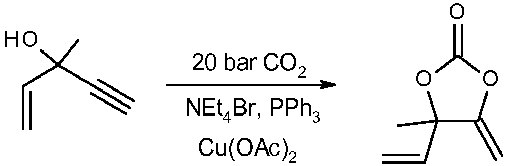

In einem 300 ml Autoklaven werden 3-Methyl-pent-1-en-4yn-3-ol (100.00 g, 1.04 mol), Triphenylphosphan (2 g, 8 mmol), Tetraethylammoniumbromid (2 g, 8 mmol) und Kupfer(II)-Acetat (0.5 g, 2.8 mmol) vorgelegt. Dann wird das Gemisch auf 75 °C erwärmt und es werden 20 bar CO₂ aufgepresst. Es wird 15 h bei 75 °C gerührt, dann auf Raumtemperatur abgekühlt und auf Normaldruck entspannt. Dieser Ansatz wird insgesamt neunmal durchgeführt und die vereinigten Reaktionsausträge werden gemeinsam destilliert (Bedingungen: 10 mbar, Badtemperatur 100°C, 20 cm Vigreux-Kolonne. Das Produkt geht bei einer Temperatur von ca. 68°C über). Es werden 1042 g (79 %) Produkt mit einer Reinheit von 98.5 % (GC Flächen%) erhalten. NMR-Analytik: entspricht der Analytik, die in der Literatur angegebenen ist (z.B. in Tetrahedron 65 (2009) 1889-1901).

### Herstellungsbeispiel 2

### Herstellung einer Verbindung gemäß Formel 1 aus Tetramethyldisiloxan und exoVCA

### (kurz: Si-V1)

### Reaktionsschema:

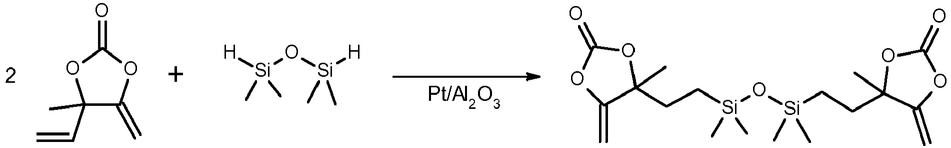

In einem 500 ml Dreihalskolben werden unter Argonatmosphäre 4-Methyl,4-vinyl,5-methylen-1,3-dioxolan-2-on (210.6 g, 1.5 mol) und Pt/Al2O3 (5% Pt auf Al2O3, 5.0 g, 1.3 mmol) vorgelegt. Das Gemisch wird auf 60°C erwärmt und dann wird 1,1,3,3-Tetramethyldisiloxan (95.06 g, 0.71 mol) innerhalb von einer Stunde portionsweise zugegeben. Hierbei wird eine exotherme Reaktion unter leichter Gasentwicklung beobachtet (Innentemperatur steigt auf 68°C). Nach Ende der Zugabe wird das Gemisch zunächst 16 h bei 70°C gerührt, im Anschluss daran noch 5 h bei 85-90°C. Nach dem Abkühlen auf Raumtemperatur wird der fest gewordene Reaktionsaustrag in 300 ml Toluol bei 60°C gelöst und es wird heiß vom Katalysator abfiltriert. Das Toluol wird im Vakuum (50°C, 20 mbar) entfernt und der Rückstand wird in 1500 ml n-Hexan bei 70°C gelöst, dann auf 10°C abgekühlt. Der farblose Feststoff wird abfiltriert und mit n-Hexan (200 ml) gewaschen und getrocknet. Das Produkt wird als farbloser Feststoff erhalten (222 g, 73 %). GC-Reinheit: 99.6 Flächen%; Schmelzpunkt: 80-82°C.
1H NMR (CDCl3, 500.1 MHz) = 4.81 (d, br, 2H), 4.27(d, br, 2H), 1.81-1.87 (m, 2H), 1.64-1.70 (m, 2H), 1.58 (s, 6H), 0.48-0.61 (m, 4H), 0.07 (s, 12H).
13C NMR (CD2Cl2, 125.8 MHz) = 157.8, 151.8, 88.5, 85.7, 34.9, 26.0, 11.2, 0.1.
29Si NMR (CDCl3, 99.4 MHz) = 8.1.

Neben der hier beschriebenen Verwendung von Pt/Al2O3 als Katalysator, können auch folgende andere Pt-Katalysatoren zum Einsatz kommen: Pt/C und PtO2.

### Herstellungsbeispiel 3

### Herstellung einer Verbindung gemäß Formel 1 aus Vernetzer V58 und exoVCA

### (kurz: Si-V 2)

In einem Autoklaven werden unter Schutzgasatmosphäre 4-Methyl, 4-vinyl, 5-methylen-1,3-dioxolan-2-on (10.00 g, 0.07 mol), Pt/Al2O3 (5% Pt auf Al2O3, 0.5 g, mmol) und Wacker® Vernetzer V58 (46 g) vorgelegt. Bei dem Vernetzer V58 der Firma Wacker handelt es sich um Polysiloxan mit einer hohen Anzahl an Silicium-gebundenen Wasserstoffatomen. Das Gemisch wird auf 75 °C erwärmt und bei dieser Temperatur 10 h gerührt. Dann wird auf Raumtemperatur abgekühlt und 1-Hexen (100 ml) wird zugegeben. Das Gemisch wird 10 h bei 100°C gerührt. Nach Filtration und Einengen der Lösung im Vakuum (25 mbar, 50°C) wird das Produkt mit zähflüssiger Konsistenz erhalten (55 g). Es wird ohne weitere Aufreinigung und Charakterisierung in der Polymersynthese eingesetzt.

Charakterisierung: Die Reaktion wurde mittels 1 H NMR-Spektroskopie verfolgt, bis das für das Edukt charakteristische Signal der Vinyl-Gruppe verschwunden ist.

### Herstellungsbeispiel 4

### Herstellung einer Verbindung gemäß Formel 1 aus Vernetzer V90 und exoVCA

### (kurz: Si-V 3)

In einem Dreihalskolben werden unter Schutzgasatmosphäre 4-Methyl, 4-vinyl, 5-methylen-1,3-dioxolan-2-on (10.0 g, 0.07 mol), Pt/Al2O3 (5% Pt auf Al2O3, 0.5 g, mmol) und Wacker® Vernetzer V90 (46 g) vorgelegt. Bei dem Vernetzer V90 der Firma Wacker handelt es sich um Polysiloxan mit einer hohen Anzahl an Silicium-gebundenen Wasserstoffatomen. Das Gemisch wird auf 85°C erwärmt und bei dieser Temperatur 6 h gerührt. Dann wird auf Raumtemperatur abgekühlt und 1-Hexen (59 g) wird zugegeben. Das Gemisch wird 4 h bei 50°C gerührt. Nach Filtration und Einengen der Lösung im Vakuum (25 mbar, 50°C) wird das Produkt mit zähflüssiger Konsistenz erhalten (49 g). Es wird ohne weitere Aufreinigung und Charakterisierung in der Polymersynthese eingesetzt.

### Anwendungsbeispiele

### 1.) Beschichtungsmasse aus Si-V 1 und Polyol.

Es wurden 10 g Joncryl 500 (Polyacrylatol), 4,14 g Si-V 1 und 0,141 g DBU (1,8-Diazabicyclo-[5.4.0]undec-7-en, Katalysator) in 6 ml Butylacetat zusammen gegeben und bei Raumtemperatur vermengt, bis eine einheitliche Mischung entstanden war.
Bei Joncryl® 500 handelt es sich um ein kommerziell erhältliches Polyacrylatol mit einer Glasübergangstemperatur Tg von -7°C, einer OH-Zahl von 140 mg KOH/g und einem Äquivalentgewicht OH von 400 (das heißt: 1 mol OH auf 400 g der Polyacrylatols)
Joncryl 500 liegt als 80 gew.%-ige Lösung in MAK vor.

Die erhaltene Mischung wurde mit einer Nassschichtdicke 250 µm auf das jeweilige Substrat (Glas zur Bestimmung der Härte und Bonderblech (Gardobond®) zur Bestimmung der Elastizität u. der Anhaftung (Gitterschnitt)) aufgetragen, 15 min bei Raumtemperatur abgelüftet und dann im Trockenofen 30 min bei der angegebenen Temperatur (siehe Tabelle 1) gehärtet. Zur Nachvernetzung wurde der gehärtete Film über Nacht im Klimaraum gelagert, anschließend wurden die lacktypischen Parameter bestimmt.

Die Ermittlung der Erichsen-Tiefung erfolgte analog DIN 53156 durch Eindrücken einer Metallkugel in die nicht beschichtete Seite des Blechs bestimmt. Hohe Werte bedeuten hohe Flexibilität. Der ermittelte Wert ist der Wert bei dem die Beschichtung den ersten Riss zeigt.

Die Pendeldämpfung wurde gemäß DIN 53157 auf Glas bestimmt. Hohe Werte bedeuten hohe Härte.

Mit dem Gitterschnitt-test (kurz G) wird die Adhäsion geprüft. Der Test erfolgte ebenfalls auf Bonderblech. Beim Gitterschnitt-test wird die Oberfläche des gehärteten Lacks mit einem Gitter eingeschnitten und beobachtet ob sich der Lack an den Schnittkanten ablöst. Die Ablösung wird visuell mit den Noten 0 (keine Ablösung) bis 5 (deutliche Ablösung) beurteilt. Je geringer die Note, um so besser ist die Haftung.

Die Ergebnisse der anwendungstechnischen Prüfungen finden sich in Tabelle 1.

**Tabelle 1**

| Beispiel | Pendel-härte [sec] | Erichsentiefung [mm] | Aussehen | G | Aushärtung bei [°C/min] |
|---|---|---|---|---|---|
| 1 | 18 | >9,5 | Klar, Stippen | 0 | 100°C |
| 2 | 18 | >9,5 | Klar, Stippen | 0 | 120°C |
| 3 | 18 | >9,5 | Klar, Stippen | 0 | 140°C |

### 2.) Beschichtungsmasse aus Si-V 3 und Polyol.

Bei Joncryl® 945 handelt es sich um ein kommerziell erhältliches Polyacrylatol mit einer Glasübergangstemperatur Tg von 17°C, einer OH-Zahl von 180 mg KOH/g und einem OH- Äquivalentgewicht von 310 (das heißt: 1 mol OH auf 310 g der Polyacrylatols)
Joncryl 945 liegt als 76 gew.-%ige Lösung in n-Butylacetat vor.

Bei Sovermol 8151® handelt es sich um ein biobasiertes kommerziell erhältliches Polyol mit einem OH-Äquivalentgewicht von 260.

Bei Desmophen 650 MPA® handelt es sich um einen kommerziell erhältlichen verzweigten Polyester der Firma Bayer MaterialScience mit einem Feststoffgehalt von 65 Gew- % in MPA (1-Methoxypropylacetat). Der Gehalt an Hydroxylgruppen ist mit 5,3 Gew.% angegeben.

Zur Bestimmung der Topfzeit wurde Si-V 3, das jeweilige Polyol (Tabelle 2) und DBU als Katalysator in den angegebenen Mengen gemischt und die Zeit bestimmt, nach der eine deutliche Viskositätserhöhung eintrat und die Mischung nicht mehr fließfähig war.

**Tabelle 2: Topfzeiten**

| Beispiel | Polyol Art und Menge | Si-V3 [g] | Katalysator DBU [g] | Topfzeit [min] |
|---|---|---|---|---|
| 4 | Joncryl 500; 2,5g | 4,0 | 0,035 | 20 |
| 5 | Joncryl 945; 2,0g | 4,0 | 0,035 | 20 |
| 6 | Joncryl 500; 1,25g | 2,0 | 0,00875 | 45 |
| 7 | Joncryl 945; 1,0g | 2,0 | 0,00875 | 35 |
| 8 | Desmophen 650 MPA; 0,8g | 2,0 | 0,00875 | >120 |
| 9 | Sovermol 815; 0,65g | 2,0 | 0,00875 | 30 |
| 10 | Joncryl 500; 1,25g | 2,0 | 0,00583 | >120 |
| 11 | Joncryl 945; 1,0g | 2,0 | 0,00583 | >120 |
| 12 | Desmophen 650 MPA; 0,8g | 2,0 | 0,00583 | >120 |
| 13 | Sovermol 815; 0,65g | 2,0 | 0,00583 | >120 |

### 3.) Beschichtungsmasse aus Si-V 2 und Aminen

4,61g Si-V 2 wurde mit 0,2g Isophorondiamin (IPDA) und 0,28g Jeffamine D 230® vermischt bis eine einheitliche Mischung erhalten wurde. Ein Katalysator wurde nicht mitverwendet.

Die erhaltene Mischung wurden zur Bestimmung der anwendungstechnischen Eigenschaften wie oben beschrieben auf Glas oder Bonderblech in einer Nassschichtdicke von 250µm aufgetragen, 15 min bei Raumtemperatur abgelüftet und dann bei 100°C im Trockenofen für 2 x 60 min gehärtet. Zur Nachvernetzung wurde der gehärtete Film über Nacht im Klimaraum gelagert, anschließend wurden die lacktypischen Parameter bestimmt.

Bei Jeffamine D 230® handelt es sich um ein kommerziell erhältliches Polyetheramin der Firma Huntsman als Diamin. (zum Jeffamine D 230 wird vom Hersteller ein gewichtsmittleres Molgewicht von 230 und eine mittlere Anzahl von 2.5 Propylenglycol-Wiederholungseinheiten angegeben).

Zu den anwendungstechnischen Prüfungen gilt das oben gesagte. Zusätzlich wurde die Chemikalienbeständigkeit geprüft.

Die Prüfung der Beständigkeit gegen Einwirkung von Chemikalien wurde in Anlehnung an DIN 68861-1 mit einer Mischung aus Ethanol: Ethylacetat 1:1 und einer Einwirkzeit von 10 sec durchgeführt. Die Beschädigung der Lackoberfläche wurde visuell mit den Noten 0 (keine Beschädigung) bis 5 (Lack löst sich auf und lässt sich abwischen) beurteilt. Je geringer die Note, umso besser ist die Beständigkeit gegen Chemikalien.

Die Ergebnisse der anwendungstechnischen Prüfungen finden sich in Tabelle 3.

| Beispiel | Chemikalientest | Pendel-härte [sec] | Erichsentiefung [mm] | Aussehen, Kommentare | G |
|---|---|---|---|---|---|
| 14 | 0 | 32 | 7,8 | Glatt, 53µm Schichtdicke | 0 |

Si-V 2 wurde mit verschiedenen Aminen genmischt und die Topfzeiten wie oben beschrieben bestimmt.

Bei den verwendeten Aminen handelt es sich um m-Xylendiamin (MXDA), Isophorondiamin (IPDA), Jeffamine D 230 oder deren Mischungen. Die Amine wurden in verschiedenen molaren verhältnissen zum Si-V 2 eingesetzt.

Ergebnisse finden sich in Tabelle 4.

**Tabelle 4: Topfzeiten**

| Beispiel | Amine | Si-V2 | Topfzeit |
|---|---|---|---|
| | Art und Menge | [g] | [min] |
| 15 | IPDA; 0,34g | 3,09 | <5 |
| 16 | MXDA; 0,28g | 3,20 | 0 |
| 17 | Jeffamine D 230; 0,48g | 3,19 | 20 |
| 18 | IPDA; 0,23g | 2,63 | <5 |
| 19 | MXDA; 0,12g | 2,76 | 0 |
| 20 | Jeffamine D 230; 0,38g | 3,07 | 15 |
| 21 | IPDA; 0,20; Jeffamine D 230; 0,28g | 4,61 | 5 |

## Patentansprüche

1. Beschichtungsmassen, enthaltend eine Verbindung mit mindestens zwei cyclischen Carbonatgruppen und einer Siloxangruppe ("Carbonatverbindung" genannt).

2. Beschichtungsmassen gemäß Anspruch 1, **dadurch gekennzeichnet, dass** die Carbonatverbindung zwei bis fünfzig cyclische Carbonatgruppen und eine Siloxangruppe mit 2 bis 100 Siliciumatomen enthält.

3. Beschichtungsmassen gemäß Anspruch 1 oder 2, **dadurch gekennzeichnet, dass** es sich bei der Carbonatverbindung um eine Verbindung der Formel I 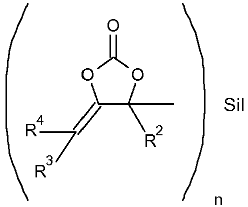 oder eine Verbindung der Formel II 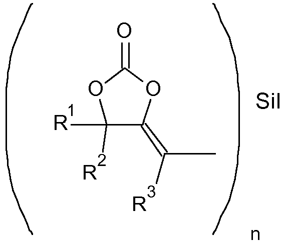 handelt, wobei Sil jeweils für einen n-wertigen Rest mit einer Siloxangruppe aus 2 bis 100 Si-Atomen steht und die Reste R¹ bis R⁴ jeweils unabhängig voneinander für Wasserstoff oder einen organische Gruppe mit 1 bis 10 C-Atomen stehen und n eine ganze Zahl von 2 bis 50 bedeutet.

4. Beschichtungsmassen gemäß einem der Ansprüche 1 bis 3, **dadurch gekennzeichnet, dass** es sich bei der Carbonatverbindung um eine Verbindung der Formel III 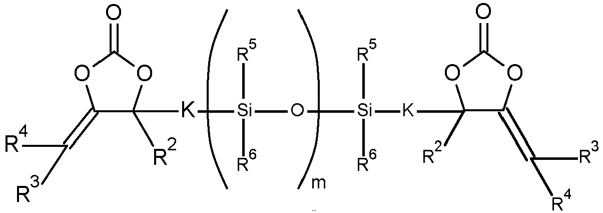 handelt, wobei R² bis R⁴ die obige Bedeutung haben, K für ein zweiwertige organische Gruppe mit 2 bis 10 C-Atomen, R⁵ und R⁶ unabhängig voneinander für ein Wasserstoffatom oder eine organische Gruppe mit 1 bis 10 C-Atomen und m für eine ganze Zahl von 1 bis 99 stehen.

5. Beschichtungsmassen gemäß einem der Ansprüche 1 bis 4, **dadurch gekennzeichnet, dass** die Carbonatverbindung erhältlich ist durch Hydrosilylierung einer Verbindung der Formel IV 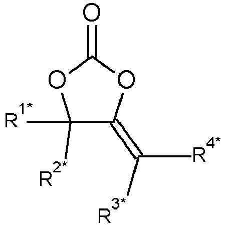 in der die Reste R1* bis R4* die obige Bedeutung der entsprechende Reste R¹ bis R⁴ haben, jedoch mindestens einer der Reste R1* bis R4* eine ethylenisch ungesättigte Gruppe enthält,
mit einem Siloxan, welches mindestens zwei Silicium-gebundene Wasserstoffatome enthält.

6. Beschichtungsmassen gemäß Anspruch 5, **dadurch gekennzeichnet, dass** es sich bei der Verbindung der Formel IV um eine Verbindung handelt, in der R^{1*} für eine C2- bis C10-Alkenylgruppe oder eine C2- C10-Alkinylgruppe, R^{2*} für ein Wasserstoffatom oder eine C1- bis C10-Alkylgruppe, und R^{3*} und R^{4*} unabhängig voneinander für ein Wasserstoffatom oder eine C1- bis C10- Alkylgruppe stehen.

7. Beschichtungsmassen gemäß Anspruch 5 oder 6, **dadurch gekennzeichnet, dass** R^{1*} in Formel IV für eine Vinylgruppe steht.

8. Beschichtungsmassen gemäß einem der Ansprüche 5 bis 7, **dadurch gekennzeichnet, dass** es sich bei der Verbindung der Formel IV um eine Verbindung handelt, in der R^{1*} für eine Vinylgruppe, R^{2*} für eine C1- bis C4-Alkylgruppe und R^{3*} und R^{4*} unabhängig voneinander für ein H-Atom stehen.

9. Beschichtungsmassen gemäß einem der Ansprüche 1 bis 8, **dadurch gekennzeichnet, dass** sie 0,1 bis 50 Gew. % der Carbonatverbindung enthalten.

10. Beschichtungsmassen gemäß einem der Ansprüche 1 bis 9, **dadurch gekennzeichnet, dass** die Beschichtungsmassen eine Verbindung mit mindestens zwei reaktiven Gruppen, ausgewählt aus Hydroxylgruppen, primären Aminogruppen, sekundären Aminogruppen und Mercaptogruppen ("reaktive Verbindung" genannt), enthalten.

11. Beschichtungsmassen gemäß Anspruch 10, **dadurch gekennzeichnet, dass** es sich bei der reaktiven Verbindung um Polyesterpolyole, Polyetherpolyole, Polyesteramidpolyole,Polycarbonatpolyole, Polyacrylatpolyole, Polyetheramine, Polyamidoamine oder deren Mischungen handelt.

12. Verwendung der Verbindung gemäß einem der Ansprüche 1 bis 8 in Beschichtungsmassen.

13. Verfahren zur Herstellung von beschichteten Substraten, **dadurch gekennzeichnet, dass** Beschichtungsmassen gemäß Ansprüche 10 oder 11 auf Substrate aufgebracht werden und danach die Carbonatverbindung gemäß einem der Ansprüche 1 bis 8 mit der reaktiven Verbindung umgesetzt wird (Härtung).

14. Verbindung der Formel I 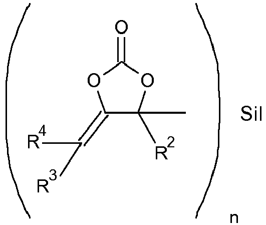 oder Verbindung der Formel II 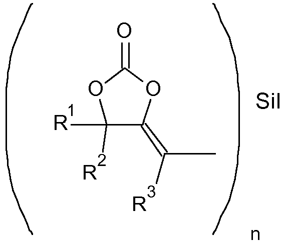 wobei Sil jeweils für einen n-wertigen Rest mit einer Siloxangruppe aus 2 bis 100 Si-Atomen steht und die Reste R¹ bis R⁴ jeweils unabhängig voneinander für Wasserstoff oder einen organische Gruppe mit 1 bis 10 C-Atomen stehen und n eine ganze Zahl von 2 bis 50 bedeutet.

## Claims

1. A coating composition comprising a compound having at least two cyclic carbonate groups and a siloxane group (called "carbonate compound").

2. The coating composition according to claim 1, wherein the carbonate compound contains two to fifty cyclic carbonate groups and a siloxane group having 2 to 100 silicon atoms.

3. The coating composition according to claim 1 or 2, wherein the carbonate compound is a compound of the formula I 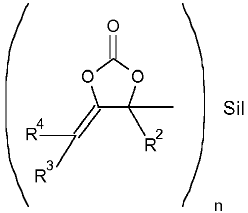 or a compound of the formula II 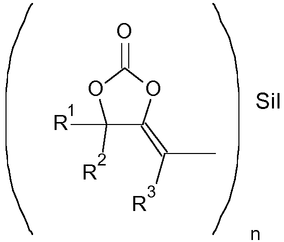 where Sil in each case is an n-valent radical with a siloxane group of 2 to 100 Si atoms and the radicals R1 to R4 in each case independently of one another are hydrogen or an organic group having 1 to 10 C atoms, and n is an integer from 2 to 50.

4. The coating composition according to any of claims 1 to 3, wherein the carbonate compound is a compound of the formula III 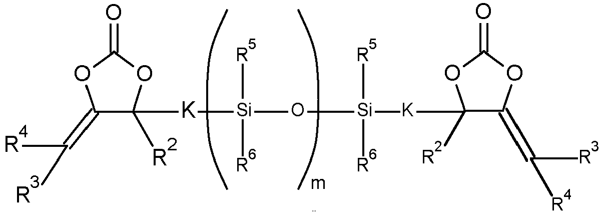 where R2 to R4 have the definition above, K is a divalent organic group having 2 to 10 C atoms, R5 and R6 independently of one another are a hydrogen atom or an organic group having 1 to 10 C atoms, and m is an integer from 1 to 99.

5. The coating composition according to any of claims 1 to 4, wherein the carbonate compound is obtainable by hydrosilylation of a compound of the formula IV 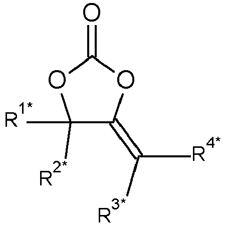 in which the radicals R1* to R4* have the above definition of the corresponding radicals R1 to R4, but at least one of the radicals R1* to R4* contains an ethylenically unsaturated group
with a siloxane which contains at least two silicon-bonded hydrogen atoms.

6. The coating composition according to claim 5, wherein the compound of the formula IV is a compound in which R1* is a C2 to C10 alkenyl group or a C2-C10 alkynyl group, R2* is a hydrogen atom or a C1 to C10 alkyl group, and R3* and R4* independently of one another are a hydrogen atom or a C1 to C10 alkyl group.

7. The coating composition according to claim 5 or 6, wherein R1* in formula IV is a vinyl group.

8. The coating composition according to any of claims 5 to 7, wherein the compound of the formula IV is a compound in which R1* is a vinyl group, R2* is a C1 to C4 alkyl group, and R3* and R4* independently of one another are an H atom.

9. The coating composition according to any of claims 1 to 8, which comprises 0.1 to 50 wt% of the carbonate compound.

10. The coating composition according to any of claims 1 to 9, which comprises a compound having at least two reactive groups selected from hydroxyl groups, primary amino groups, secondary amino groups, and mercapto groups (called "reactive compound").

11. The coating composition according to claim 10, wherein the reactive compound comprises polyester polyols, polyether polyols, polyesteramide polyols, polycarbonate polyols, polyacrylate polyols, polyetheramines, polyamidoamines, or mixtures thereof.

12. The use of a compound according to any of claims 1 to 8 in a coating composition.

13. A method for producing a coated substrate, which comprises applying a coating composition according to claim 10 or 11 to a substrate and thereafter reacting the carbonate compound according to any of claims 1 to 8 with the reactive compound (curing).

14. A compound of the formula I 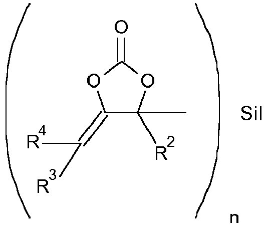 or a compound of the formula II 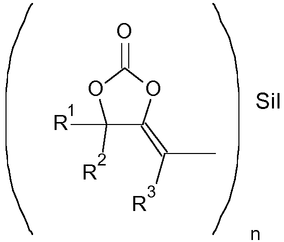 where Sil in each case is an n-valent radical with a siloxane group of 2 to 100 Si atoms and the radicals R1 to R4 in each case independently of one another are hydrogen or an organic group having 1 to 10 C atoms, and n is an integer from 2 to 50.

## Revendications

1. Masses de revêtement, contenant un composé présentant au moins deux groupes carbonate cycliques et un groupe siloxane (appelé "composé carbonate").

2. Masses de revêtement selon la revendication 1, **caractérisées en ce que** le composé carbonate contient deux à cinquante groupes carbonate cycliques et un groupe siloxane comprenant 2 à 100 atomes de silicium.

3. Masses de revêtement selon la revendication 1 ou 2, **caractérisées en ce qu'**il s'agit, pour le composé carbonate, d'un composé de formule I 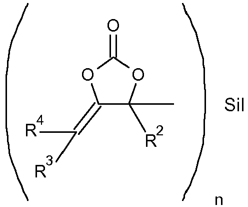 ou d'un composé de formule II 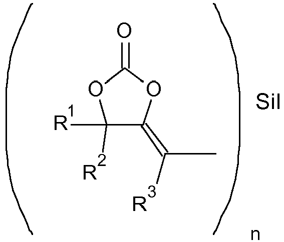 dans lesquelles Sil représente à chaque fois un radical n-valent présentant un groupe siloxane de 2 à 100 atomes de silicium et les radicaux R¹ à R⁴ représentent à chaque fois, indépendamment les uns des autres, hydrogène ou un groupe organique comprenant 1 à 10 atomes de carbone et n signifie un nombre entier de 2 à 50.

4. Masses de revêtement selon l'une quelconque des revendications 1 à 3, **caractérisées en ce qu'**il s'agit, pour le composé carbonate, d'un composé de formule III 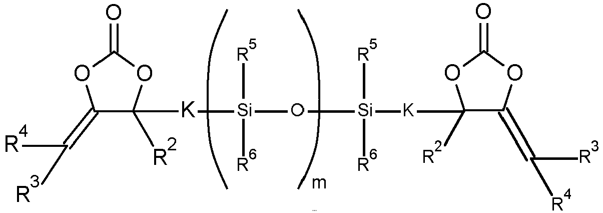 dans laquelle R² à R⁴ représentent la signification ci-dessus, K représente un groupe organique divalent comprenant 2 à 10 atomes de carbone, R⁵ et R⁶ représentent, indépendamment l'un de l'autre, un atome d'hydrogène ou un groupe organique comprenant 1 à 10 atomes de carbone et m signifie un nombre entier de 1 à 99.

5. Masses de revêtement selon l'une quelconque des revendications 1 à 4, **caractérisées en ce que** le composé carbonate peut être obtenu par hydrosilylation d'un composé de formule IV 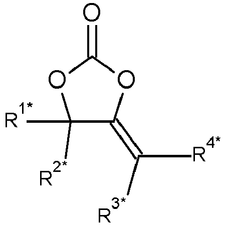 dans laquelle les radicaux R^{1*} à R^{4*} présentent la signification ci-dessus des radicaux R¹ à R⁴ correspondants, mais au moins un des radicaux R^{1*} à R^{4*} présente un groupe éthyléniquement insaturé, avec un siloxane qui contient au moins deux atomes d'hydrogène liés au silicium.

6. Masses de revêtement selon la revendication 5, **caractérisées en ce qu'**il s'agit, pour le composé de formule IV, d'un composé dans lequel R^{1*} représente un groupe C2-C10-alcényle ou un groupe C2-C10-alcynyle, R^{2*} représente un atome d'hydrogène ou un groupe C1-C10-alkyle et R^{3*} et R^{4*} représentent, indépendamment l'un de l'autre, un atome d'hydrogène ou un groupe C1-C10-alkyle.

7. Masses de revêtement selon la revendication 5 ou 6, **caractérisées en ce que** R^{1*} dans la formule IV représente un groupe vinyle.

8. Masses de revêtement selon l'une quelconque des revendications 5 à 7, **caractérisées en ce qu'**il s'agit, pour le composé de formule IV, d'un composé dans lequel R^{1*} représente un groupe vinyle, R^{2*} représente un groupe C1-C4-alkyle et R^{3*} et R^{4*} représentent, indépendamment l'un de l'autre, un atome d'hydrogène.

9. Masses de revêtement selon l'une quelconque des revendications 1 à 8, **caractérisées en ce qu'**elles contiennent 0,1 à 50% en poids du composé carbonate.

10. Masses de revêtement selon l'une quelconque des revendications 1 à 9, **caractérisées en ce que** les masses de revêtement contiennent un composé présentant au moins deux groupes réactifs, choisis parmi les groupes hydroxyle, les groupes amino primaire, les groupes amino secondaire et les groupes mercapto (appelé "composé réactif").

11. Masses de revêtement selon la revendication 10, **caractérisées en ce qu'**il s'agit, pour le composé réactif, de polyesterpolyols, de polyétherpolyols, de polyesteramidepolyols, de polycarbonatepolyols, de polyacrylatepolyols, de polyétheramines, de polyamidoamines ou de leurs mélanges.

12. Utilisation du composé selon l'une quelconque des revendications 1 à 8 dans des masses de revêtement.

13. Procédé pour la préparation de substrats revêtus, **caractérisé en ce que** des masses de revêtement selon les revendications 10 ou 11 sont appliquées sur des substrats et le composé carbonate selon l'une quelconque des revendications 1 à 8 est ensuite transformé avec le composé réactif (durcissement).

14. Composé de formule I 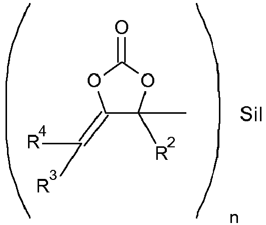 ou composé de formule II 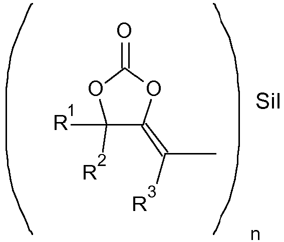 dans lesquelles Sil représente à chaque fois un radical n-valent présentant un groupe siloxane de 2 à 100 atomes de silicium et les radicaux R¹ à R⁴ représentent à chaque fois, indépendamment les uns des autres, hydrogène ou un groupe organique comprenant 1 à 10 atomes de carbone et n signifie un nombre entier de 2 à 50.
